# EUROPEAN PATENT SPECIFICATION

(11) **EP 3 413 163 B1**
(45) Date of publication and mention of the grant of the patent: **10.11.2021**
(21) Application number: 17759216.9
(22) Date of filing: 28.02.2017
(51) Int. Cl.: G06F 1/32, G06F 3/041, G06F 1/3234, G06F 1/3231

(54) **METHOD FOR PROCESSING DATA COLLECTED BY TOUCH PANEL, AND TERMINAL DEVICE**
VERFAHREN ZUR VERARBEITUNG VON ÜBER EINEN BERÜHRUNGSBILDSCHIRM ERFASSTEN DATEN UND ENDGERÄTEVORRICHTUNG
PROCÉDÉ POUR TRAITER DES DONNÉES CAPTÉES PAR UN PANNEAU TACTILE ET DISPOSITIF DE TERMINAL

(30) Priority: 04.03.2016 CN 201610124713
(43) Date of publication of application: 12.12.2018
(73) Proprietor: Huawei Technologies Co., Ltd., Longgang District Shenzhen, Guangdong 518129 (CN)
(72) Inventor: ZHONG, Guanghua, Shenzhen Guangdong 518129 (CN); PAN, Bin, Shenzhen Guangdong 518129 (CN); YANG, Weijian, Shenzhen Guangdong 518129 (CN)
(74) Representative: Pfenning, Meinig & Partner mbB
(86) International application number: PCT/CN2017/075161
(87) International publication number: WO 2017/148365

(56) References cited:
- CN-A- 101 668 351
- CN-A- 103 235 688
- CN-A- 103 491 243
- CN-A- 103 902 101
- CN-A- 105 700 668
- US-A1- 2012 182 225
- US-A1- 2012 191 993
- US-A1- 2014 220 959
- US-A1- 2015 362 979

## Description

### TECHNICAL FIELD

The present invention relates to the touch panel field, and in particular, to a method for processing data collected by a touch panel, and a terminal device.

### BACKGROUND

As a new human-machine interaction carrier, a touch panel is widely applied to various intelligent terminal products. The touch panel is a frequently-used module of an intelligent terminal such as a mobile phone, and therefore, user experience of the touch panel is crucial. Power consumption is one of factors that affect user experience.

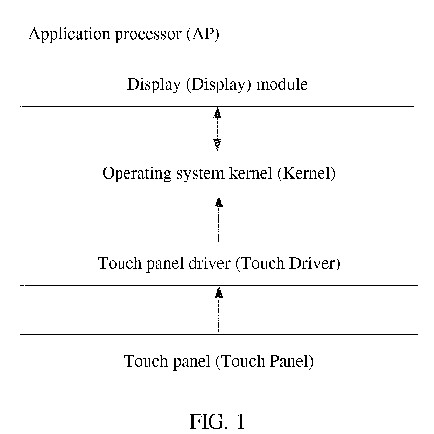

FIG. 1 shows a processing procedure of touch data of a touch panel. A touch panel driver (Touch Driver) in an application processor (Application Processor, AP) obtains touch data from the touch panel (Touch Panel), and then the touch panel driver reports the touch data to an operating system kernel (Kernel) in the AP. After processing the data, the kernel invokes a display (Display) module to display an image by frame.

In this process, the AP needs to process the touch data of the touch panel anytime. Even if the AP has no task, to prevent performance from being affected, the AP cannot enter a deep sleep state. Therefore, load of the AP is relatively heavy, and power consumption of a device is increased.

US 2015/362979 A1 discloses a touch screen terminal including a touch screen, a touch control component, and a display control component. The touch screen includes a touch component and a display component. The touch control component is configured to detect whether the touch component generates a touch signal when the touch screen terminal is in a locked mode; when the touch signal meets the first preset condition, start the display control component. The display control component is configured to control the display component to display a corresponding interface after the display control component is started.

US 2012/191993 A1 discloses a system and method for reducing power consumption in an electronic device by controlling the transition of the electronic device from a sleep mode to a full power mode. The electronic device comprises a main processor a touch-sensitive overlay, and an overlay controller.

US 2014/220959 A1 discloses an electronic terminal further including a prohibition unit configured to prohibit a part of the input and output function of the at least one input and output unit which is unrelated to the communication event.

US 2012/182225 A1 discloses detecting the presence of at least one predetermined object held against a capacitive touch screen by a user's finger or hand.

### SUMMARY

The present invention is as defined in the appended independent claims. Further improvements are disclosed in the appended dependent claims, the description and the figures. Embodiments of the present invention provide a method for processing data collected by a touch panel, and a terminal device, so that power consumption of a device can be reduced.

According to a first aspect, an embodiment of the present invention provides a method for processing data collected by a touch panel. A touch panel communicates with an AP by using a micro control unit (Microcontroller Unit, MCU), and the method includes: obtaining, by the MCU, touch data from the touch panel, pre-processing the touch data, and sending the pre-processed touch data to the AP.

In this embodiment of the present invention, the touch panel communicates with the AP by using the MCU, instead of directly communicating with the AP. The MCU pre-processes the touch data of the touch panel to filter ineffective touch data, and then sends effective touch data to the AP. Therefore, the MCU can process the touch data of the touch panel anytime when the AP enters a sleep state, and the MCU can filter the touch data, so that the AP is not wakened up by an ineffective touch event when the AP enters a sleep state, thereby reducing load of the AP, and reducing power consumption of a device.

With reference to the first aspect, in a first possible implementation of the first aspect, the sending, by the MCU, the pre-processed touch data to the AP includes: sending, by the MCU, the touch data to the AP by using a dedicated touch data channel, where the touch data channel is used to send only the touch data.

In this embodiment of the present invention, the touch data is transmitted between the AP and the MCU by using the dedicated touch data channel, and is isolated from other data (non-touch data), so that a touch data transmission delay can be reduced, touch data processing efficiency is improved, and system performance is improved. According to the first aspect, the pre-processing, by the MCU, the touch data includes: pre-processing, by the MCU, the touch data by using a first frequency, where the first frequency is greater than a processing frequency of the AP. In an Android (android) system, the system sends a frame synchronization (Vertical Synchronization, VSYNC) signal (by using about a 60 Hz frequency) every 16 ms to trigger the AP to process data, and therefore, the processing frequency of the AP is 60 Hz. A sampling frequency of the touch panel is 120 Hz, the MCU obtains the touch data from the touch panel, and therefore, a frequency for processing the touch data is also 120 Hz. In this case, the first frequency is 120 Hz, and is greater than the processing frequency 60 Hz of the AP. According to the first aspect, the MCU determines, by using the first frequency, a touch event corresponding to the touch data. In some embodiments, the touch event is any one of a down (Down) event, a move (Move) event, or an up (Up) event. For example, the MCU determines, by using the first frequency, that the touch event corresponding to the touch data is a down event, a move event, or an up event. In some other embodiments, the MCU determines, by using the first frequency, that the touch event corresponding to the touch data includes multiple events, such as including a down event and an up event or including a down event, a move event, and an up event. In some other embodiments, the touch event may be another event, for example, an event generated by a non-contact gesture.

Therefore, the MCU processes the touch data by using a processing frequency greater than that of the AP, so that an effective touch event can be recognized in a shorter period, and screen response performance can be improved.

With reference to the first aspect, in a fourth possible implementation of the first aspect, in some embodiments, the MCU pre-processes the touch data in one or more of the following manners: The MCU reports the down event and the up event to the AP; for the move event, the MCU determines, by using the first frequency, a movement distance corresponding to the move event; and if the movement distance is greater than a first preset threshold in a system, reports the move event to the AP; or if the movement distance is less than a first preset threshold in a system, does not report the move event to the AP.

Therefore, in comparison with processing the move event on the AP side, the move event can be rapidly processed on the MCU side, and effective move can be recognized in a shorter period, so that a time of determining an effective move event is reduced, and screen response performance can be further improved.

Currently, in a terminal device that supports a screen-off wakeup gesture function, most terminal devices depend on the AP for gesture recognition, and especially a complex gesture. Therefore, in a screen-off state, the AP needs at least one kernel for processing. In this embodiment of the present invention, with reference to the first aspect, in a fifth possible implementation of the first aspect, the pre-processing, by the MCU, the touch event further includes: when the touch panel is in a screen-off state, determining, by the MCU, whether a gesture corresponding to the touch event is the same as a screen-off wakeup gesture preset in a system; and if the gesture corresponding to the touch event is the same as the screen-off wakeup gesture preset in the system, sending a wakeup instruction to the AP; or if the gesture corresponding to the touch event is different from the screen-off wakeup gesture preset in the system, not sending a wakeup instruction to the AP.

Therefore, in this embodiment of the present invention, in a screen-off state, gesture recognition may be performed without the AP, and the MCU determines the screen-off wakeup gesture. When the gesture is correct, the AP in a sleep state is wakened up; or when the gesture is ineffective, the AP in a sleep state is not wakened up, and the AP may stay in a sleep state. In this way, a case in which power consumption is generated after the AP is wakened up by an incorrect screen-off wakeup gesture is avoided, so that overall power consumption of a device can be further reduced.

With reference to any possible implementation of the first aspect, in a sixth possible implementation of the first aspect, the method further includes: obtaining, by the MCU, sensing data of a sensor; and the pre-processing, by the MCU, the touch data by using a first frequency, and sending the pre-processed touch data to the AP includes: determining, by the MCU according to the sensing data, whether the touch event is a misoperation event; and if it is determined that the touch event is not a misoperation event, sending the touch event to the AP; or if it is determined that the touch event is a misoperation event, not sending the touch event to the AP.

In this way, the MCU can pre-process the touch event of the touch panel by using the sensing data of the sensor, so as to filter a misoperation event. The AP is not wakened up by a misoperation to some extent, that is, a case in which power consumption is generated after the AP is wakened up by a misoperation is avoided. Therefore, overall power consumption of the AP is effectively reduced, and power consumption of the terminal device is reduced.

With reference to the sixth possible implementation of the first aspect, in a seventh possible implementation of the first aspect, the sensor is a light sensor, and the determining, by the MCU according to the sensing data, whether the touch event is a misoperation event includes: when the touch panel is in a screen-off state, determining, by the MCU, whether illuminance measured by the light sensor is greater than a second preset threshold, and if the illuminance is not greater than the second preset threshold, determining that the touch event is a misoperation event.

Optionally, before performing the step of distinguishing the touch event the first aspect, the MCU first determines, according to the sensing data, whether a touch operation is a misoperation, and if it is determined that the touch operation is a misoperation, does not process the touch data, such as subsequent distinguishing of a touch event, and does not report the touch data to the AP.

Specifically, if the touch panel is in a screen-off state, the MCU determines whether illuminance measured by the light sensor is greater than a second preset threshold, and if the illuminance is not greater than the second preset threshold, determines that an operation corresponding to the touch data obtained by the MCU from the touch panel is a misoperation operation.

According to a second aspect, an embodiment of the present invention provides a terminal device, and the terminal device includes:
a touch panel, a micro control unit MCU, and an application processor AP, where the AP is electrically connected to the MCU, and the touch panel is electrically connected to the MCU; the touch panel is configured to collect touch data; the MCU is configured to: obtain the touch data, pre-process the touch data, and send the pre-processed touch data to the AP; and AP is configured to perform event response according to the touch data sent by the MCU.

With reference to any possible implementation of the second aspect, in a first possible implementation of the second aspect, optionally, the application processor is electrically connected to the MCU by using a peripheral bus.

With reference to any possible implementation of the second aspect, in a second possible implementation of the second aspect, the touch panel is electrically connected to the MCU by using an inter-integrated circuit I2C bus.

Further, in a third possible implementation of the second aspect, the terminal device further includes a touch data channel, the touch data channel is electrically connected to a peripheral bus, and the touch data channel is used for data communication only between the MCU and the AP; and the MCU is specifically configured to send the touch data to the AP by using the touch data channel.

Further, according to the second aspect, when pre-processing the touch data, the MCU is specifically configured to pre-process the touch data by using a first frequency, where the first frequency is greater than a processing frequency of the AP.

With reference to the second aspect, in a possible implementation of the second aspect, when pre-processing the touch data by using the first frequency, the MCU is specifically configured to determine, by using the first frequency, a touch event corresponding to the touch data, where the touch event is one or more of a down (Down) event, a move (Move) event, or an up (Up) event.

With reference to the second aspect, in a possible implementation of the second aspect, after determining, by using the first frequency, the touch event corresponding to the touch data, the MCU is further configured to: if determining that the event corresponding to the touch data is a move event, determine, by using the first frequency, a movement distance corresponding to the move event; and if the movement distance is greater than a first preset threshold in a system, send the move event to the AP; or if the movement distance is less than a first preset threshold in a system, not send the move event to the AP.

With reference to the second aspect, in a possible implementation of a seventh aspect, after determining, by using the first frequency, the touch event corresponding to the touch data, the MCU is further configured to: when the touch panel is in a screen-off state, determine whether a gesture corresponding to the touch event is the same as a screen-off wakeup gesture preset in a system; and if the gesture corresponding to the touch event is the same as the screen-off wakeup gesture preset in the system, send a wakeup instruction to the AP; or if the gesture corresponding to the touch event is different from the screen-off wakeup gesture preset in the system, not send a wakeup instruction to the AP.

With reference to any possible implementation of the second aspect, in an eighth possible implementation of the second aspect, the MCU is further configured to obtain sensing data; and the MCU is further configured to: determine, according to the sensing data, whether the touch event is a misoperation event; and when determining that the touch event is not a misoperation event, send the touch event to the AP; or when determining that the touch event is a misoperation event, not send the touch event to the AP.

With reference to the eighth possible implementation of the second aspect, in a ninth possible implementation of the second aspect, when determining, according to the sensing data, whether the touch event is a misoperation event, the MCU is specifically configured to: when the touch panel is in a screen-off state, determine whether illuminance measured by a light sensor is greater than a second preset threshold, and if the illuminance is not greater than the second preset threshold, determine that the touch event is a misoperation event.

With reference to the second aspect, or the first possible implementation of the second aspect to the third possible implementation of the second aspect, in a tenth possible implementation of the second aspect, the MCU is further configured to obtain sensing data; and when pre-processing the touch data and sending the pre-processed touch data to the AP, the MCU is specifically configured to: determine, according to the sensing data, whether an operation corresponding to the touch data is a misoperation, and if determining that the operation is a misoperation, not process the touch data, such as subsequent distinguishing of a touch event, and not report the touch data to the AP. Optionally, when determining, according to the sensing data, whether the operation corresponding to the touch data is a misoperation, the MCU is specifically configured to: when the touch panel is in a screen-off state, determine whether illuminance measured by a light sensor is greater than a second preset threshold, and if the illuminance is not greater than the second preset threshold, determine that the operation corresponding to the touch data obtained by the MCU from the touch panel is a misoperation.

With reference to any possible implementation of the second aspect, in some specific implementations, the MCU is a low function sensor hub coprocessor.

In this manner, a sensor hub in a terminal device in the prior art can implement a function implemented by the MCU in this embodiment of the present invention.

According to a third aspect, an embodiment of the present invention provides a processor, and the processor includes: a touch data obtaining module, configured to obtain touch data from a touch panel, where the touch panel is electrically connected to the processor; a touch data pre-processing module, configured to pre-process the touch data; and a touch data sending module, configured to send the pre-processed touch data to an application processor AP, where the AP is electrically connected to the processor. With reference to the third aspect, in a first possible implementation of the third aspect, the touch data sending module is specifically configured to send a touch event to the AP by using a touch data channel, where the touch data channel is used to send only the touch data.

With reference to the third aspect or the first possible implementation of the third aspect, in a second possible implementation of the third aspect, the touch data pre-processing module is specifically configured to pre-process the touch data by using a first frequency, where the first frequency is greater than a processing frequency of the AP. With reference to the second possible implementation of the third aspect, in a third possible implementation of the third aspect, the touch data pre-processing module is specifically configured to determine, by using the first frequency, a touch event corresponding to the touch data, where the touch event is one or more of a down (Down) event, a move (Move) event, or an up (Up) event.

With reference to the third possible implementation of the third aspect, in a fourth possible implementation of the third aspect, the touch data pre-processing module is specifically configured to: if determining that the event corresponding to the touch data is a move event, determine, by using the first frequency, a movement distance corresponding to the move event; and the touch data sending module is specifically configured to: if the movement distance is greater than a first preset threshold in a system, send the move event to the AP; or if the movement distance is less than a first preset threshold in a system, not send the move event to the AP.

With reference to the third possible implementation of the third aspect, in a fifth possible implementation of the third aspect, the touch data pre-processing module is specifically configured to: when the touch panel is in a screen-off state, determine whether a gesture corresponding to the touch event is the same as a screen-off wakeup gesture preset in a system; and the touch data sending module is specifically configured to: if the gesture corresponding to the touch event is the same as the screen-off wakeup gesture preset in the system, send a wakeup instruction to the AP.

With reference to the third possible implementation of the third aspect, in a sixth possible implementation of the third aspect, the processor further includes: a sensing data obtaining module, configured to obtain sensing data; the touch data pre-processing module is specifically configured to determine, according to the sensing data, whether the touch event is a misoperation event; and the touch data sending module is specifically configured to: when it is determined that the touch event is not a misoperation event, send the touch event to the AP.

With reference to the sixth possible implementation of the third aspect, in a seventh possible implementation of the third aspect, if a sensor is a light sensor, when determining, according to the sensing data, whether the touch event is a misoperation event, the touch data pre-processing module is specifically configured to: when the touch panel is in a screen-off state, determine whether illuminance measured by the light sensor is greater than a second preset threshold, and if the illuminance is not greater than the second preset threshold, determine that the touch event is a misoperation event.

With reference to the third aspect or the second possible implementation of the third aspect, in an eighth possible implementation of the third aspect, the processor further includes: a sensing data obtaining module, configured to obtain sensing data; and the touch data pre-processing module is specifically configured to: determine, according to the sensing data, whether an operation corresponding to the touch data is a misoperation, and if determining that the operation is a misoperation, not process the touch data, such as subsequent distinguishing of a touch event, and not report the touch data to the AP. With reference to the sixth possible implementation of the third aspect, in a seventh possible implementation of the third aspect, if a sensor is a light sensor, when determining, according to the sensing data, whether an operation corresponding to the touch data is a misoperation, the touch data pre-processing module is specifically configured to: when the touch panel is in a screen-off state, determine whether illuminance measured by the light sensor is greater than a second preset threshold, and if the illuminance is not greater than the second preset threshold, determine that the operation corresponding to the touch data obtained by the MCU from the touch panel is a misoperation.

According to a fourth aspect, an embodiment of the present invention further provides a computer storage medium. The medium stores a program, and when the program is executed, some or all steps of any implementation provided in the foregoing method in the present invention can be implemented.

According to a fifth aspect, an embodiment of the present invention further provides a touch panel data processing apparatus. The apparatus includes one or more function modules that can implement the foregoing method steps. For example, the apparatus includes a function module configured to obtain touch data from a touch panel, a function module configured to pre-process the touch data, and a function module configured to send the pre-processed touch data to the AP.

It can be learned from the foregoing technical solutions that, the solutions in the embodiments of the present invention have the following beneficial effects:
In the embodiments of the present invention, the touch panel communicates with the application processor AP by using the MCU, instead of directly communicating with the AP. The MCU obtains the touch data of the touch panel, pre-processes the touch data to filter ineffective touch data and obtain effective touch data, and sends the effective touch data to the AP. In this way, the MCU can process the touch data of the touch panel anytime when the AP enters a sleep state, and the MCU can filter the touch data. Therefore, in the solutions of the present invention, the AP without a task can enter a deep sleep state while system performance is not reduced, thereby reducing load of the AP, and reducing power consumption of a device.

### BRIEF DESCRIPTION OF DRAWINGS

FIG. 1 is a flowchart of a method for processing data collected by a touch panel in the prior art according to an embodiment of the present invention;
FIG. 2 is a schematic diagram of a principle of a hardware structure of a terminal device according to an embodiment of the present invention;
FIG. 3 is a schematic diagram of a principle of a hardware structure of a terminal device in which an MCU is a sensor hub coprocessor according to an embodiment of the present invention; and
FIG. 4 is a flowchart of a method for processing data collected by a touch panel according to an embodiment of the present invention.

### DESCRIPTION OF EMBODIMENTS

Currently, a touch panel is widely applied to various types of terminal devices. The touch panel is not only an input apparatus but also an output apparatus. A user may perform an operation such as tap or slide on a touch panel of a terminal device by using a finger, so that the touch panel changes content displayed on the touch panel. The touch panel is used in an application scenario, for example, when the user browses pictures in a gallery or plays games.

The touch panel in the embodiments of the present invention may be touch panels with different operating principles and different information transmission mediums, including a resistive touch panel, a surface capacitive touch panel, a projected capacitive touch panel, an infrared touch panel, a surface acoustic wave touch panel, a bending wave touch panel, an active digital converter touch panel, and an optical imaging touch panel.

The embodiments of the present invention are applied to various terminal devices with a touch panel, including a handheld device, an in-vehicle device, a wearable device, a computing device, and various types of user equipment (User Equipment, UE for short), for example, a device such as a mobile phone or a tablet computer.

A touch panel controller scans a touch panel at a particular scanning frequency during operation of the touch panel, to obtain user touch position data (coordinates of a touch point), and sends the obtained user touch position data to an application processor AP of a terminal device. Then, the AP processes and displays an image according to the touch position data.

User experience of a touch panel mainly includes two aspects: performance and power consumption. Operation smoothness of the touch panel is the most visual performance representation, and power consumption of the touch panel affects a battery life of a device. Performance is in contradiction with power consumption. In a same environment, in the prior art, it is common to sacrifice performance for the sake of power consumption, or sacrifice power consumption for the sake of performance. For example, in the prior art, resampling and interface refreshing are performed in advance in a VSYNC manner, so as to improve move performance of a touch panel. VSYNC is a key image processing module in an Android system, and determines a sampling point and a moment of drawing an image. However, because the VSYNC is started in advance, power consumption of a device is increased to some extent. In addition, the VSYNC can start to draw an image only with a move event, and consequently, performance improvement is limited.

For another example, in the prior art, when a screen is on and an AP does not have a task, power consumption is effectively reduced by enabling some processors to enter a deep sleep state. However, in this case, when a processor in a deep sleep state is wakened up, 10 ms or even a longer time is always required, and consequently, frame freezing is caused, and performance and user experience of the touch panel are reduced. Therefore, to ensure that performance is not affected, a deep sleep state is not allowed. Therefore, in the prior art, load of the AP is relatively heavy, and power consumption of the device is large. In addition, due to a performance bottleneck, performance cannot be effectively improved while power consumption is reduced.

An embodiment of the present invention provides a method for processing data collected by a touch panel, and a terminal device, so that power consumption of a device can be reduced, and performance can be further improved.

Referring to FIG. 1, FIG. 1 is a schematic diagram of a touch data processing procedure in the prior art. In a hardware structure of a terminal device in the prior art, an AP is directly electrically connected to a touch panel, and a touch panel driver in the AP obtains touch data from the touch panel.

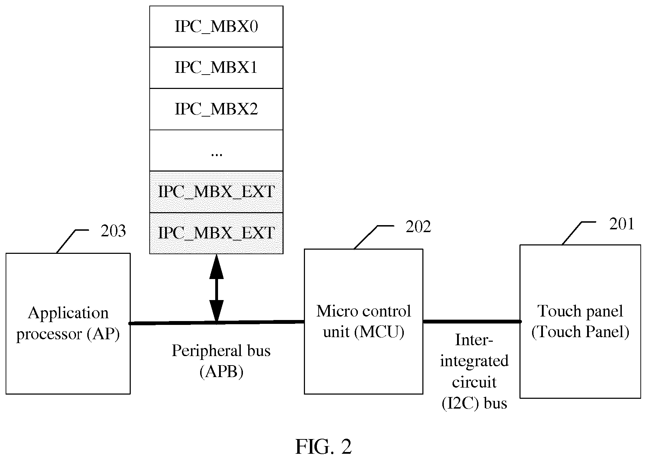

In a hardware structure of a terminal device in this embodiment of the present invention, an AP is connected to a touch panel by using an MCU. FIG. 2 is a specific schematic diagram of a principle of a hardware structure.

The terminal device in this embodiment of the present invention includes a touch panel 201, a micro control unit MCU 202, and an application processor AP 203. The AP 203 is electrically connected to the MCU 202 by using a peripheral bus (Advanced Peripheral Bus, APB), and the touch panel 201 is electrically connected to the MCU 202 by using an inter-integrated circuit (I2C) bus.

It should be noted that in actual application, in a preferred solution, the MCU 202 in this embodiment of the present invention is a coprocessor (Co-processor), and extends a kernel processing function by extending an instruction set or by providing a configuration register.

Specifically, touch data communication is performed between the AP 203 and the MCU 202 by using a dedicated touch data channel 204. The touch data channel is implemented by using a register mounted on the peripheral bus. As inter-process communication mailbox extension (Inter-Process Communication Mailbox Extention, IPC_MBX_EXT) shown in the diagram, the register is specially configured to control receiving and sending of touch data. Other IPC_MBX0, IPC_MBX 1, and IPC_MBX2 are used to control receiving and sending of non-touch data, for example, sensing data. The touch data can be isolated from the non-touch data for transmission by using the dedicated touch data channel, so that a touch data transmission delay is not reduced, touch data processing efficiency is improved, and system performance is improved.

In the terminal device with this hardware structure, the touch panel 201 is configured to collect touch data. The MCU 202 is configured to: obtain the touch data of the touch panel 201, pre-process the touch data, and send the pre-processed touch data to the AP 203. The AP 203 is configured to: perform event response according to the touch data sent by the MCU 202, and display a change effect of a triggered object by using the touch panel.

Specifically, the MCU 202 processes, by running a software program, the touch data obtained from the touch panel. Optionally, the software program run on the MCU 202 may include a touch panel driver (Touch Driver) and an event processing module (EventHub) in terms of function.

The touch panel driver is configured to: obtain the touch data of the touch panel, calculate the touch data to obtain data such as coordinates of a touch point, pressure, and a finger ID, and send the touch data to the event processing module. The event processing module is configured to: receive the touch data sent by the touch panel driver, pre-process the touch data, and send the pre-processed touch data to an operating system kernel (Kernel) in the AP 203. After processing the data, the operating system kernel invokes a display (Display) module to display an image corresponding to the touch event by frame.

The following describes in detail a specific implementation of the software program run on the MCU 202.

In some embodiments, when pre-processing the touch data, the MCU 202 is specifically configured to pre-process the touch data by using a first frequency, where the first frequency is greater than a processing frequency of the AP. In an Android system, the processing frequency of the AP is 60 Hz, and the first frequency used by the MCU 202 is 120 Hz.

Specifically, when pre-processing the touch data by using the first frequency, the MCU 202 is specifically configured to determine, by using the first frequency, a touch event corresponding to the touch data, where the touch event is one or more of a down (Down) event, a move (Move) event, or an up (Up) event.

In some embodiments, a down event is corresponding to a down operation performed by a user on a touch panel of a mobile phone, a move (or slide) event is corresponding to a move operation performed by the user from a position to another position on the touch panel, and an up event is corresponding to an up operation performed by the user on the touch panel, that is, leaving the touch panel. These operations may be performed by a finger, or may be performed by a stylus or another touch device. Down, move, and up are only common names of the three events, and the present invention is not limited thereto.

It should be noted that, in some other embodiments, the touch event may be another event, for example, an event generated by a non-contact gesture.

Therefore, the MCU 202 processes the touch data by using a processing frequency greater than that of the AP, so that an effective touch event can be recognized in a shorter period, and screen response performance can be improved.

In some embodiments, after determining, by using the first frequency, the touch event corresponding to the touch data, the MCU 202 is further configured to: determine, by using the first frequency, a movement distance corresponding to the move event; and if the movement distance is greater than a first preset threshold in a system, send the move event to the AP; or if the movement distance is less than a first preset threshold in a system, not send the move event to the AP.

Therefore, the MCU 202 can rapidly process the move event, and recognize effective move in a shorter period, so that a time of distinguishing and determining a tap event and a move event is reduced, and screen response performance can be further improved. In some embodiments, the MCU 202 is further configured to: when the touch panel is in a screen-off state, determine whether a gesture corresponding to the touch event is the same as a screen-off wakeup gesture preset in a system; and if the gesture corresponding to the touch event is the same as the screen-off wakeup gesture preset in the system, send a wakeup instruction to the AP; or if the gesture corresponding to the touch event is different from the screen-off wakeup gesture preset in the system, not send a wakeup instruction to the AP.

Therefore, in this embodiment of the present invention, in a screen-off state, gesture recognition may be performed without the AP, and the MCU determines the screen-off wakeup gesture. When the gesture is correct, the AP in a sleep state is wakened up; or when the gesture is ineffective, the AP in a sleep state is not wakened up, and the AP may stay in a sleep state. However, in the prior art, for most screen-off wakeup gestures, the AP is required for gesture recognition, and the AP cannot enable all kernels to enter a sleep state. Therefore, in comparison with the prior art, in the present invention, a sleep of the AP can be extended, and a case in which power consumption is generated after the AP is wakened up by an incorrect screen-off wakeup gesture is avoided, so that overall power consumption of a device can be reduced.

In some embodiments, the MCU 202 is further configured to obtain sensing data; and the MCU 202 is further specifically configured to: determine, according to the sensing data, whether the touch event is a misoperation event; and when determining that the touch event is not a misoperation event, send the touch event to the AP; or when determining that the touch event is a misoperation event, not send the touch event to the AP.

Optionally, when determining, according to the sensing data, whether the touch event is a misoperation event, the MCU 202 is specifically configured to: when the touch panel is in a screen-off state, determine whether illuminance measured by a light sensor is greater than a second preset threshold, and if the illuminance is not greater than the second preset threshold, determine that the touch event is a misoperation event.

In some embodiments, the MCU is further configured to obtain sensing data; and when pre-processing the touch data and sending the pre-processed touch data to the AP, the MCU is specifically configured to: first determine, according to the sensing data, whether an operation corresponding to the touch data is a misoperation, and if determining that the operation is a misoperation, not process the touch data obtained from the touch panel, such as subsequent distinguishing of a touch event (down, move, and up), directly discard or ignore the touch data, and not report the touch data to the AP; or if determining that the operation is not a misoperation, continue to perform a step such as distinguishing the touch event, perform other pre-processing on the touch data, and then report the pre-processed touch data to the AP.

Optionally, when determining, according to the sensing data, whether the operation corresponding to the touch data is a misoperation, the MCU is specifically configured to: when the touch panel is in a screen-off state, determine whether illuminance measured by a light sensor is greater than a second preset threshold, and if the illuminance is not greater than the second preset threshold, determine that the operation corresponding to the touch data obtained by the MCU from the touch panel is a misoperation.

Specifically, for obtaining data of a sensor, the MCU 202 may directly or indirectly obtain sensing data of the sensor by extending a function of the event processing module (EventHub).

In this way, the touch event of the touch panel can be pre-processed by using the data of the sensor, so that a misoperation event can be filtered. The AP is not wakened up by a misoperation to some extent, that is, a case in which power consumption is generated after the AP is wakened up by a misoperation is avoided. Therefore, overall power consumption of the AP is effectively reduced, and power consumption of the terminal device is reduced.

In this embodiment of the present invention, the touch panel communicates with the application processor AP by using the micro control unit MCU, instead of directly communicating with the AP. The MCU pre-processes the touch data of the touch panel, and sends the processed data to the AP, so that the MCU can process the touch data of the touch panel anytime when the AP enters a sleep state, and the MCU can filter the touch data. Therefore, in this solution of the present invention, the AP without a task can enter a deep sleep state while system performance is not reduced, thereby reducing load of the AP, and reducing power consumption of a device.

A function of the MCU 202 in this embodiment of the present invention may be implemented by using a coprocessor. Preferably, a low function sensor hub (SensorHub) coprocessor in the prior art may be used.

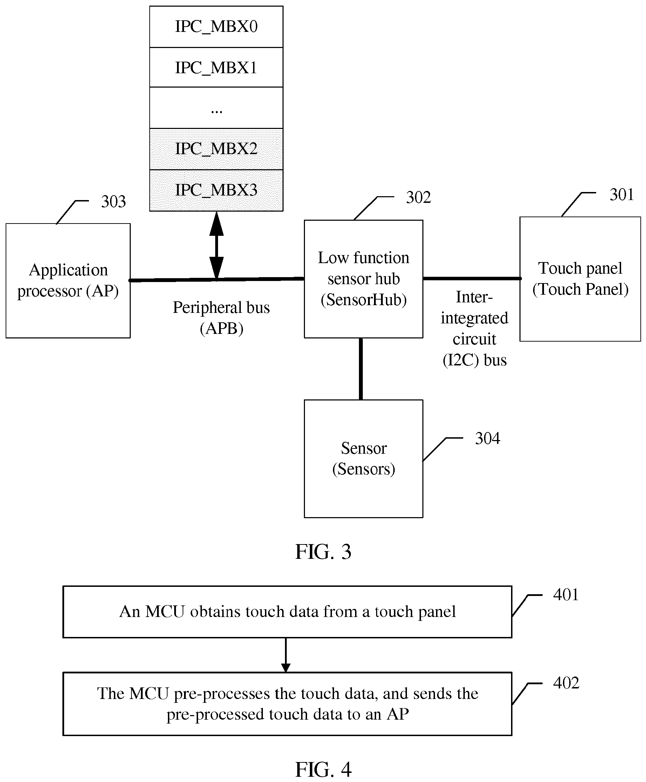

FIG. 3 is a schematic diagram of a principle of a hardware structure in which an MCU in an embodiment of the present invention and a sensor hub coprocessor in the prior art are integrated.

An AP 303 is electrically connected to a sensor hub 302 by using a peripheral bus, a touch panel 301 is electrically connected to the sensor hub 302 by using an I2C bus, and the sensor hub 302 is connected to one or more sensors (Sensors) 304. Multiple registers are mounted on the peripheral bus. IPC_MBX0 and IPC_MBX1 are used for sensing data communication, and IPC_MBX2 and IPC_MBX3 are used for touch data communication. The two data transmission channels are dedicated data channels, and do not interfere with each other.

The sensor hub 302 has a function of the MCU 202 in the embodiment shown in FIG. 2, the AP 303 has a function of the AP 202 in the embodiment shown in FIG. 2, and the touch panel 301 has a function of the touch panel 201 in the embodiment shown in FIG. 2. Details are not described herein again.

In this embodiment of the present invention, the MCU is the sensor hub coprocessor, and a function of the MCU in this embodiment of the present invention can be implemented by using a sensor hub in a conventional terminal device, so that feasibility of this solution is improved. In addition, sensing data can be conveniently obtained, and a touch event of the touch panel is pre-processed by using data of a sensor.

The following describes in detail a procedure of a method for processing data collected by a touch panel in an embodiment of the present invention with reference to FIG. 3. The method is performed by the MCU in the embodiment shown in FIG. 2 or the sensor hub coprocessor in the embodiment shown in FIG. 3.

401. The MCU obtains touch data from a touch panel.

When a user touches the touch panel, the touch panel collects the touch data. The MCU obtains the touch data from the touch panel. A specific obtaining manner is as follows: The touch panel sends an interrupt request to the MCU by using an interrupt controller, and the MCU obtains the touch data from the touch panel after receiving the interrupt request.

A touch panel driver in the MCU performs coordinate point calculation on the touch data to obtain touch data such as a touch coordinate point, and sends the touch data to an event processing module in the MCU.

402. The MCU pre-processes the touch data, and sends the pre-processed touch data to an AP.

The event processing module in the MCU pre-processes the touch data after receiving the touch data sent by the touch panel driver, to filter an ineffective touch event, and sends the pre-processed touch data to the AP.

Specifically, the MCU pre-processes the touch data by using a first frequency, and the first frequency is greater than a processing frequency of the AP. In an Android system, the system sends a VSYNC signal (by using about a 60 Hz frequency) every 16 ms to trigger the AP to process data, and therefore, the processing frequency of the AP is 60 Hz. A sampling frequency of the touch panel is 120 Hz, the MCU obtains the touch data from the touch panel, and therefore, a frequency for processing the touch data is consistent with the sampling frequency of the touch panel, and is 120 Hz. Therefore, the MCU can process the touch data by using a processing frequency greater than that of the AP, so that an effective touch event can be recognized in a shorter period, and screen response performance can be improved.

For a terminal device in the Android system, a touch event is one or more of a down down event, an up up event, or a move move event. In all operation events, a down operation (ACTION_DOWN) needs to be first performed, and the other subsequent operations are performed on the premise of the down operation. When the down operation is completed, a move operation (ACTION_MOVE) may be performed, and then an up operation (ACTION_UP) is performed, or when execution of the down operation is completed, an up operation is directly performed without a move operation. Therefore, a down action (ACTION_DOWN) needs to be first performed on the touch panel each time, and an up action (ACTION_UP) needs to be performed after user touch ends.

Specifically, that the MCU pre-processes the touch data is as follows: For the touch data, a touch event is first distinguished by using the first frequency (120 Hz), and the touch data is determined as one or more of a down event, a move event, or an up event. Then, that the MCU pre-processes the touch event further includes but is not limited to the following manners.

### 1. Rapidly distinguish an effective move event

When the user touches the touch panel, the MCU distinguishes an event corresponding to the touch data by using the first frequency (120 Hz). The MCU determines a move event (Move event) from detecting a down action (ACTION_DOWN), that is, a down event to detecting an up action (ACTION_UP), that is, an up event. In a specific move event determining process, in each sampling period, the MCU determines whether a movement distance corresponding to the user touch is greater than a first preset threshold in a system. If the movement distance is greater than the first preset threshold in the system, the MCU determines that the move event is an effective move event, and reports the move event to the AP, and the AP draws an image by invoking an imaging processing module; or if the movement distance corresponding to the user touch is not greater than the preset threshold in the system, the move event is an ineffective move event, and is not reported to the AP. Therefore, in this process, an ineffective move event (such as a finger shake or a relatively small movement distance) can be filtered. It should be noted that herein, a movement distance corresponding to user touch in each period is a distance calculated starting from a down action (ACTION_DOWN) to an up action. In a screen-on state, when detecting a down event (ACTION_DOWN) and an up event (ACTION_UP), the MCU directly reports the down event and the up event to the AP.

Persons skilled in the art should understand that the first preset threshold provided in this embodiment of the present invention may be a movement distance determining threshold preset in the Android system, and a common value is 4 ms; or may be set according to a specific empirical value. This is not limited herein.

In the prior art of the Android system, for the touch data, the AP distinguishes an event, the processing frequency of the AP is 60 Hz, and the processing frequency of the MCU is 120 Hz and is greater than the processing frequency of the AP. Therefore, in the present invention, the move event can be rapidly processed on the MCU side, and effective move is recognized in a shorter period, so that a time of determining an effective move event is reduced, screen response performance can be further improved, and user experience can be improved.

### 2. Screen-off wakeup gesture processing

If the terminal device supports a screen-off wakeup gesture function, when the touch panel is in a screen-off state, instead of directly reporting the touch event to the AP after obtaining the touch event, the MCU first determines whether a user move gesture corresponding to the touch event is the same as a screen-off wakeup gesture preset in a system. If the user move gesture is the same as the screen-off wakeup gesture, a wakeup instruction is generated and the wakeup instruction is sent to the AP. The wakeup instruction is used to wake up the AP, so that the AP lights up a screen. If the user move gesture is different from the screen-off wakeup gesture, a wakeup instruction is not sent to the AP, that is, the touch event is filtered and is not reported to the AP. Therefore, the AP may stay in a sleep state, and the AP is not wakened up by an incorrect screen wakeup gesture operation. That is, a case in which power consumption is generated after the AP is wakened up by an incorrect screen-off wakeup gesture is avoided, thereby effectively reducing overall power consumption of the AP, and reducing power consumption of the terminal device.

### 3. Filter a touch event by using sensing data

The MCU obtains sensing data in addition to the touch data of the touch panel, determines, according to the sensing data, whether the touch event is a misoperation event, and if the touch event is a misoperation event, does not send the touch event to the AP, or if the touch event is not a misoperation event, sends the touch event to the AP.

For example, when the touch panel is in a screen-off state, if the MCU detects a touch event, the MCU determines the touch event by using currently obtained data of a light sensor. A specific determining manner is as follows: It is determined whether illuminance measured by the light sensor is greater than a second preset threshold, and if the illuminance is not greater than the second preset threshold, it is determined that the current touch event is a misoperation event.

Optionally, after obtaining the touch data, for the touch data, the MCU does not perform the step of distinguishing the touch event by using the first frequency (120 Hz) and determining the touch data as one or more of a down event, a move event, or an up event. Instead, the MCU first determines, according to the sensing data, whether the touch operation is a misoperation, and if determining that the touch operation is a misoperation, does not process the touch data, such as subsequent distinguishing of a touch event, discards or ignores the touch data, and does not report the touch data to the AP; or if determining that the touch operation is not a misoperation, continues to perform a step such as distinguishing the touch event, performs other pre-processing on the touch data, and then reports the pre-processed touch data to the AP.

Specifically, if the touch panel is in a screen-off state, the MCU determines whether illuminance measured by the light sensor is greater than a second preset threshold, and if the illuminance is not greater than the second preset threshold, determines that an operation corresponding to the touch data obtained by the MCU from the touch panel is a misoperation operation.

A specific application scenario is used as an example for description: When the terminal device (for example, a mobile phone) is put in a pocket of a user and is in a screen-off state, the user slides a screen of the mobile phone due to a misoperation. In this case, the MCU obtains illuminance data measured by a current light sensor, and because the terminal device is currently in the pocket, the illuminance data is less than a second preset threshold set in a system. Therefore, it is determined that the mobile phone is in a place with weak light, it is further determined that the slide action is a misoperation, and the misoperation is not reported to the AP. In this way, the AP is not wakened up by the misoperation.

Persons skilled in the art should understand that the second preset threshold provided in this embodiment of the present invention may be set according to experience, or may be set by collecting illuminance data in different light situations and analyzing the illuminance data. For example, if all illuminance data collected in weak light is less than A by means of analyzing, the second preset threshold may be set to A. Preferably, a value of A is usually 7 lux (lux).

Therefore, in this embodiment of the present invention, the MCU may obtain sensing data of a sensor, and determine the touch operation according to the sensing data. If the touch operation is a misoperation, the touch operation is not reported to the AP, and the misoperation is filtered by means of pre-processing, so that the AP is not wakened up by the misoperation to some extent, that is, a case in which power consumption is generated after the AP is wakened up by the misoperation is avoided, thereby effectively reducing overall power consumption of the AP, and reducing power consumption of the terminal device.

In conclusion, in this embodiment of the present invention, the MCU pre-processes the touch data of the touch panel to filter ineffective touch data, and then sends effective touch data to the AP. The MCU can process the touch data of the touch panel anytime when the AP enters a sleep state, and the MCU can filter the touch data, so that the AP is not wakened up by an ineffective touch event and a misoperation event when the AP enters a sleep state, and power consumption can be effectively reduced. In addition, the MCU can process the touch data by using a frequency greater than the processing frequency of the AP, so that an effective touch event can be recognized in a shorter period, screen response performance can be improved, and user experience is improved. In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A method for processing data collected by a touch panel, wherein a touch panel (201) communicates with an application processor (102) by using a micro control unit, MCU (202), the method comprising:
obtaining (401), by the MCU (202), touch data from the touch panel; and
pre-processing (402), by the MCU (202), the touch data in order to determine a touch event corresponding to the touch data, and sending the pre-processed touch data to the application processor (203) which is configured to perform touch event response according to the touch data sent by the MCU (202) and display a change effect of a triggered object by using the touch panel (201);
**characterized in that** the pre-processing, by the MCU (202), of the touch data comprises:
pre-processing, by the MCU (202), the touch data by using a first frequency, which is equal to a sampling frequency of the touch panel (201), in order to determine a touch event corresponding to the touch data, wherein the first frequency is greater than a second frequency, said second frequency corresponding to a processing frequency of the application processor (203), which is equal to a display frame synchronization frequency.

2. The method according to claim 1, wherein the sending, by the MCU, the pre-processed touch data to the application processor comprises:
sending, by the MCU, the touch data to the application processor by using a touch data channel, wherein the touch data channel is used to send only the touch data.

3. The method according to claim 1, wherein the pre-processing, by the MCU, the touch data by using a first frequency comprises:
determining, by the MCU by using the first frequency, a touch event corresponding to the touch data, wherein the touch event is one or more of a down event, a move event, or an up event.

4. The method according to claim 3, wherein the pre-processing, by the MCU, the touch data by using a first frequency further comprises:
when the touch panel is in a screen-off state and the application processor is in a sleep state, determining, by the MCU, whether a gesture corresponding to the touch event is the same as a screen-off wakeup gesture preset in a system; and
the sending the pre-processed touch data to the application processor comprises:
if the gesture corresponding to the touch event is the same as the screen-off wakeup gesture preset in the system, sending a wakeup instruction to the application processor.

5. The method according to claim 3, wherein the method further comprises:
obtaining, by the MCU, sensing data of a sensor;
the pre-processing, by the MCU, the touch data by using a first frequency further comprises:
determining, by the MCU according to the sensing data, whether the touch event is a misoperation event; and
the sending the pre-processed touch data to the application processor comprises:
when it is determined that the touch event is not a misoperation event, sending the touch event to the application processor.

6. The method according to claim 5, wherein the sensor is a light sensor; and
the determining, by the MCU according to the sensing data, whether the touch event is a misoperation event comprises:
when the touch panel is in a screen-off state, determining, by the MCU, whether illuminance measured by the light sensor is greater than a second preset threshold, and if the illuminance is not greater than the second preset threshold, determining that the touch event is a misoperation event.

7. A terminal device, wherein the terminal device comprises:
a touch panel (201), a micro control unit MCU (202), and an application processor (203), wherein
the application processor (203) is electrically connected to the MCU (202), and the touch panel (201) is electrically connected to the MCU (202);
the touch panel is configured to collect touch data;
the MCU (202) is configured to: obtain the touch data, pre-process the touch data in order to determine a touch event corresponding to the touch data, and send the pre-processed touch data to the application processor; and
the application processor (203) is configured to perform event response according to the touch data sent by the MCU (202) and display a change effect of a triggered object by using the touch panel (201);
**characterized in that**
when pre-processing the touch data, the MCU is specifically configured to pre-process the touch data by using a first frequency, which is equal to a sampling frequency of the touch panel, in order to determine a touch event corresponding to the touch data, wherein the first frequency is greater than a second frequency, said second frequency corresponding to a processing frequency of the application processor (203), which is equal to a display frame synchronization frequency.

8. The terminal device according to claim 7, wherein
the application processor is electrically connected to the MCU by using a peripheral bus, and the touch panel is electrically connected to the MCU by using an inter-integrated circuit I2C bus.

9. The terminal device according to claim 7, wherein the terminal device further comprises a touch data channel, the touch data channel is electrically connected to a peripheral bus, and the touch data channel is used for data communication only between the MCU and the application processor; and
the MCU is specifically configured to send the touch data to the application processor by using the touch data channel.

10. The terminal device according to claim 7, wherein
when pre-processing the touch data by using the first frequency, the MCU is specifically configured to determine, by using the first frequency, a touch event corresponding to the touch data, wherein the touch event is one or more of a down event, a move event, or an up event.

11. The terminal device according to claim 10, wherein
after determining, by using the first frequency, the touch event corresponding to the touch data, the MCU is further configured to: when the touch panel is in a screen-off state and the application processor is in a sleep state, determine whether a gesture corresponding to the touch event is the same as a screen-off wakeup gesture preset in a system; and if the gesture corresponding to the touch event is the same as the screen-off wakeup gesture preset in the system, send a wakeup instruction to the application processor.

12. The terminal device according to claim 10, wherein
the MCU is further configured to obtain sensing data; and after determining, by using the first frequency, the touch event corresponding to the touch data, the MCU is further configured to: determine, according to the sensing data, whether the touch event is a misoperation event; and when determining that the touch event is not a misoperation event, send the touch event to the application processor.

13. The terminal device according to claim 12, wherein
when determining, according to the sensing data, whether the touch event is a misoperation event, the MCU is specifically configured to:
when the touch panel is in a screen-off state, determine whether illuminance measured by a light sensor is greater than a second preset threshold, and if the illuminance is not greater than the second preset threshold, determine that the touch event is a misoperation event.

## Patentansprüche

1. Verfahren zum Verarbeiten von Daten, die über einen Touchscreen erfasst werden, wobei ein Touchscreen (201) mit einem Anwendungsprozessor (102) kommuniziert, indem eine Mikrosteuereinheit (Micro Control Unit, MCU) (202) verwendet wird, wobei das Verfahren umfasst:
Erhalten (401), durch die MCU (202), von Berührungsdaten von dem Touchscreen; und
Vorverarbeiten (402) der Berührungsdaten durch die MCU (202), um ein Berührungsereignis zu ermitteln, das den Berührungsdaten entspricht, und Senden der vorverarbeiteten Berührungsdaten an den Anwendungsprozessor (203), der konfiguriert ist zum Ausführen einer Berührungsereignisantwort gemäß den Berührungsdaten, die von der MCU (202) gesendet werden, und Anzeigen eines Änderungseffekts eines getriggerten Objekts, indem der Touchscreen (201) verwendet wird;
**dadurch gekennzeichnet, dass** das Vorverarbeiten der Berührungsdaten durch die MCU (202) umfasst:
Vorverarbeiten der Berührungsdaten durch die MCU (202), indem eine erste Frequenz verwendet wird, die gleich einer Abtastfrequenz des Touchscreens (201) ist, um ein Berührungsereignis zu ermitteln, das den Berührungsdaten entspricht, wobei die erste Frequenz größer als eine zweite Frequenz ist, wobei die zweite Frequenz einer Verarbeitungsfrequenz des Anwendungsprozessors (203) entspricht, die gleich einer Einzelbildsynchronisationsfrequenz ist.

2. Verfahren nach Anspruch 1, wobei das Senden der vorverarbeiteten Berührungsdaten von der MCU an den Anwendungsprozessor umfasst:
Senden der Berührungsdaten von der MCU an den Anwendungsprozessor, indem ein Berührungsdatenkanal verwendet wird, wobei der Berührungsdatenkanal nur verwendet wird, um die Berührungsdaten zu senden.

3. Verfahren nach Anspruch 1, wobei das Vorverarbeiten der Berührungsdaten durch die MCU, indem eine erste Frequenz verwendet wird, umfasst:
Ermitteln, durch die MCU, indem die erste Frequenz verwendet wird, eines Berührungsereignisses, das den Berührungsdaten entspricht, wobei das Berührungsereignis eines oder mehrere eines Abwärtsereignisses, eines Bewegungsereignisses oder eines Aufwärtsereignisses ist.

4. Verfahren nach Anspruch 3, wobei das Vorverarbeiten der Berührungsdaten durch die MCU, indem eine erste Frequenz verwendet wird, außerdem umfasst:
wenn sich der Touchscreen in einem Bildschirmruhezustand und der Anwendungsprozessor in einem Schlafzustand befinden, Ermitteln, durch die MCU, ob eine Geste, die dem Berührungsereignis entspricht, die gleiche ist wie eine Weckgeste für eine Bildschirmruhe, die in einem System voreingestellt ist; und
wobei das Senden der vorverarbeiteten Berührungsdaten an den Anwendungsprozessor umfasst:
wenn die Geste, die dem Berührungsereignis entspricht, die gleiche ist wie die Weckgeste für die Bildschirmruhe, die in dem System voreingestellt ist, Senden eines Weckbefehls an den Anwendungsprozessor.

5. Verfahren nach Anspruch 3, wobei das Verfahren außerdem umfasst:
Erhalten, in der MCU, von Sensordaten von einem Sensor;
wobei das Vorverarbeiten der Berührungsdaten durch die MCU, indem eine erste Frequenz verwendet wird, außerdem umfasst:
Ermitteln, durch die MCU gemäß den Sensordaten, ob das Berührungsereignis ein Fehlbedienungsereignis ist; und
wobei das Senden der vorverarbeiteten Berührungsdaten an den Anwendungsprozessor umfasst:
wenn ermittelt wird, dass das Berührungsereignis kein Fehlbedienungsereignis ist, Senden des Berührungsereignisses an den Anwendungsprozessor.

6. Verfahren nach Anspruch 5, wobei der Sensor ein Lichtsensor ist; und
wobei das Ermitteln, durch die MCU gemäß den Sensordaten, ob das Berührungsereignis ein Fehlbedienungsereignis ist, umfasst:
wenn sich der Touchscreen in einem Bildschirmruhezustand befindet, Ermitteln, durch die MCU, ob eine Beleuchtungsstärke, die von dem Lichtsensor gemessen wird, größer als ein zweiter voreingestellter Schwellenwert ist, und wenn die Beleuchtungsstärke nicht größer als der zweite voreingestellte Schwellenwert ist, Ermitteln, dass das Berührungsereignis ein Fehlbedienungsereignis ist.

7. Endgerätevorrichtung, wobei die Endgerätevorrichtung umfasst:
einen Touchscreen (201), eine Mikrosteuereinheit (Micro Control Unit, MCU) (202) und einen Anwendungsprozessor (203), wobei
der Anwendungsprozessor (203) mit der MCU (202) elektrisch verbunden ist, und der Touchscreen (201) mit der MCU (202) elektrisch verbunden ist;
der Touchscreen konfiguriert ist zum Erfassen von Berührungsdaten,
die MCU (202) konfiguriert ist zum: Erhalten der Berührungsdaten; Vorverarbeiten der Berührungsdaten, um zu ermitteln, dass das Berührungsereignis den Berührungsdaten entspricht; und Senden der vorverarbeiteten Berührungsdaten an den Anwendungsprozessor; und
der Anwendungsprozessor (203) konfiguriert ist zum: Ausführen einer Ereignisantwort gemäß den Berührungsdaten, die von der MCU (202) gesendet werden, und Anzeigen eines Änderungseffekts eines getriggerten Objekts, indem der Touchscreen (201) verwendet wird;
**dadurch gekennzeichnet, dass**,
wenn die Berührungsdaten vorverarbeitet werden, die MCU insbesondere konfiguriert ist zum Vorverarbeiten der Berührungsdaten, indem eine erste Frequenz verwendet wird, die gleich einer Abtastfrequenz des Touchscreens ist, um ein Berührungsereignis zu ermitteln, das den Berührungsdaten entspricht, wobei die erste Frequenz größer als eine zweite Frequenz ist, wobei die zweite Frequenz einer Verarbeitungsfrequenz des Anwendungsprozessors (203) entspricht, die gleich einer Einzelbildsynchronisationsfrequenz ist.

8. Endgerätevorrichtung nach Anspruch 7, wobei
der Anwendungsprozessor mit der MCU elektrisch verbunden ist, indem ein peripherer Bus verwendet wird, und wobei der Touchscreen mit der MCU elektrisch verbunden ist, indem ein 12C-Bus (Inter-integrated circuit bus) verwendet wird.

9. Endgerätevorrichtung nach Anspruch 7, wobei
die Endgerätevorrichtung außerdem einen Berührungsdatenkanal umfasst, wobei der Berührungsdatenkanal mit dem peripheren Bus elektrisch verbunden ist und der Berührungsdatenkanal für eine Datenkommunikation nur zwischen der MCU und dem Anwendungsprozessor verwendet wird; und
die MCU insbesondere konfiguriert ist zum Senden der Berührungsdaten an den Anwendungsprozessor, indem der Berührungsdatenkanal verwendet wird.

10. Endgerätevorrichtung nach Anspruch 7, wobei,
wenn die Berührungsdaten vorverarbeitet werden, indem die erste Frequenz verwendet wird, die MCU insbesondere konfiguriert ist zum Ermitteln eines Berührungsereignisses, das den Berührungsdaten entspricht, indem die erste Frequenz verwendet wird, wobei das Berührungsereignis eines oder mehrere eines Abwärtsereignisses, eines Bewegungsereignisses oder eines Aufwärtsereignisses ist.

11. Endgerätevorrichtung nach Anspruch 10, wobei,
nach dem Ermitteln des Berührungsereignisses, das den Berührungsdaten entspricht, indem die erste Frequenz verwendet wird, die MCU außerdem konfiguriert ist zum, wenn sich der Touchscreen in einem Bildschirmruhezustand und der Anwendungsprozessor in einem Schlafzustand befinden, Ermitteln, ob eine Geste, die dem Berührungsereignis entspricht, die gleiche ist wie eine Weckgeste für eine Bildschirmruhe, die in einem System voreingestellt ist; und wenn die Geste, die dem Berührungsereignis entspricht, die gleiche ist wie die Weckgeste für die Bildschirmruhe, die in dem System voreingestellt ist, Senden eines Weckbefehls an den Anwendungsprozessor.

12. Endgerätevorrichtung nach Anspruch 10, wobei
die MCU außerdem konfiguriert ist zum Erhalten von Sensordaten; und die MCU, nach dem Ermitteln des Berührungsereignisses, das den Berührungsdaten entspricht, indem die erste Frequenz verwendet wird, außerdem konfiguriert ist zum Ermitteln gemäß den Sensordaten, ob das Berührungsereignis ein Fehlbedienungsereignis ist; und wenn ermittelt wird, dass das Berührungsereignis kein Fehlbedienungsereignis ist, Senden des Berührungsereignisses an den Anwendungsprozessor.

13. Endgerätevorrichtung nach Anspruch 12, wobei,
wenn gemäß den Sensordaten ermittelt wird, ob das Berührungsereignis ein Fehlbedienungsereignis ist, die MCU insbesondere konfiguriert ist zum: wenn sich der Touchscreen in einem Bildschirmruhezustand befindet, Ermitteln, ob eine Beleuchtungsstärke, die von einem Lichtsensor gemessen wird, größer als ein zweiter voreingestellter Schwellenwert ist, und wenn die Beleuchtungsstärke nicht größer als der zweite voreingestellte Schwellenwert ist, Ermitteln, dass das Berührungsereignis ein Fehlbedienungsereignis ist.

## Revendications

1. Procédé de traitement de données collectées par un panneau tactile, dans lequel un panneau tactile (201) communique avec un processeur d'application (102) en utilisant une unité de microcontrôleur, MCU (202), le procédé comprenant :
l'obtention (401), par la MCU (202), de données tactiles à partir du panneau tactile ; et
le prétraitement (402), par la MCU (202), des données tactiles afin de déterminer un événement tactile correspondant aux données tactiles, et l'envoi des données tactiles prétraitées au processeur d'application (203) qui est configuré pour effectuer une réponse d'événement tactile en fonction des données tactiles envoyées par la MCU (202) et pour afficher un effet de changement d'un objet déclenché en utilisant le panneau tactile (201) ;
**caractérisé en ce que** le prétraitement, par la MCU (202), des données tactiles comprend :
le prétraitement, par la MCU (202), des données tactiles en utilisant une première fréquence, qui est égale à une fréquence d'échantillonnage du panneau tactile (201), afin de déterminer un événement tactile correspondant aux données tactiles, la première fréquence étant supérieure à une seconde fréquence, ladite seconde fréquence correspondant à une fréquence de traitement du processeur d'application (203), qui est égale à une fréquence de synchronisation de trame d'affichage.

2. Procédé selon la revendication 1, dans lequel l'envoi, par la MCU, des données tactiles prétraitées au processeur d'application comprend :
l'envoi, par la MCU, des données tactiles au processeur d'application en utilisant un canal de données tactiles, le canal de données tactiles étant utilisé pour envoyer seulement les données tactiles.

3. Procédé selon la revendication 1, dans lequel le prétraitement, par la MCU, des données tactiles en utilisant une première fréquence comprend :
la détermination, par la MCU en utilisant la première fréquence, d'un événement tactile correspondant aux données tactiles, l'événement tactile étant un ou plusieurs événements parmi un événement vers le bas, un événement de déplacement ou un événement vers le haut.

4. Procédé selon la revendication 3, dans lequel le prétraitement, par la MCU, des données tactiles en utilisant une première fréquence comprend en outre :
lorsque le panneau tactile se trouve dans un état d'écran éteint et que le processeur d'application se trouve dans un état de veille, déterminer, par la MCU, si un geste correspondant à l'événement tactile est le même qu'un geste de réveil d'écran éteint prédéfini dans un système ; et
l'envoi des données tactiles prétraitées au processeur d'application comprend :
si le geste correspondant à l'événement tactile est le même que le geste de réveil d'écran éteint prédéfini dans le système, envoyer une instruction de réveil au processeur d'application.

5. Procédé selon la revendication 3, dans lequel le procédé comprend en outre :
l'obtention, par la MCU, de données de détection d'un capteur ;
le prétraitement, par la MCU, des données tactiles en utilisant une première fréquence comprend en outre :
la détermination, par la MCU en fonction des données de détection, pour savoir si l'événement tactile est un événement de dysfonctionnement ; et
l'envoi des données tactiles prétraitées au processeur d'application comprend :
lorsqu'on détermine que l'événement tactile n'est pas un événement de dysfonctionnement, envoyer l'événement tactile au processeur d'application.

6. Procédé selon la revendication 5, dans lequel le capteur est un capteur de lumière ; et la détermination, par la MCU en fonction des données de détection, pour savoir si l'événement tactile est un événement de dysfonctionnement comprend :
lorsque le panneau tactile se trouve dans un état d'écran éteint, déterminer, par la MCU, si l'éclairement mesuré par le capteur de lumière est supérieur à un second seuil prédéfini, et si l'éclairement n'est pas supérieur à un second seuil prédéfini, déterminer que l'événement tactile est un événement de dysfonctionnement.

7. Dispositif terminal, dans lequel le dispositif terminal comprend :
un panneau tactile (201), une unité de microcontrôleur MCU (202), et un processeur d'application (203), dans lequel
le processeur d'application (203) est connecté électriquement à la MCU (202), et le panneau tactile (201) est connecté électriquement à la MCU (202) ;
le panneau tactile est configuré pour collecter des données tactiles ;
la MCU (202) est configurée pour : obtenir les données tactiles, prétraiter les données tactiles afin de déterminer un événement tactile correspondant aux données tactiles, et envoyer les données tactiles prétraitées au processeur d'application ; et
le processeur d'application (203) est configuré pour effectuer une réponse d'événement en fonction des données tactiles envoyées par la MCU (202) et pour afficher un effet de changement d'un objet déclenché en utilisant le panneau tactile (201) ;
**caractérisé en ce que**
lors du prétraitement des données tactiles, la MCU est configurée spécifiquement pour prétraiter les données tactiles en utilisant une première fréquence, qui est égale à une fréquence d'échantillonnage du panneau tactile, afin de déterminer un événement tactile correspondant aux données tactiles, la première fréquence étant supérieure à une seconde fréquence, ladite seconde fréquence correspondant à une fréquence de traitement du processeur d'application (203), qui est égale à une fréquence de synchronisation de trame d'affichage.

8. Dispositif terminal selon la revendication 7, dans lequel le processeur d'application est connecté électriquement à la MCU en utilisant un bus périphérique, et le panneau tactile est connecté électriquement à la MCU en utilisant un bus I2C de circuit inter-intégré.

9. Dispositif terminal selon la revendication 7, dans lequel le dispositif terminal comprend en outre un canal de données tactiles, le canal de données tactiles est connecté électriquement à un bus périphérique, et le canal de données tactiles est utilisé pour une communication de données seulement entre la MCU et le processeur d'application ; et
la MCU est configurée spécifiquement pour envoyer les données tactiles au processeur d'application en utilisant le canal de données tactiles.

10. Dispositif terminal selon la revendication 7, dans lequel
lors du prétraitement des données tactiles en utilisant la première fréquence, la MCU est configurée spécifiquement pour déterminer, en utilisant la première fréquence, un événement tactile correspondant aux données tactiles, l'événement tactile étant un ou plusieurs événements parmi un événement vers le bas, un événement de déplacement ou un événement vers le haut.

11. Dispositif terminal selon la revendication 10, dans lequel après la détermination, en utilisant la première fréquence, de l'événement tactile correspondant aux données tactiles, la MCU est configurée en outre pour : lorsque le panneau tactile se trouve dans un état d'écran éteint et que le processeur d'application se trouve dans un état de veille, déterminer si un geste correspondant à l'événement tactile est le même qu'un geste de réveil d'écran éteint prédéfini dans un système ; et si le geste correspondant à l'événement tactile est le même que le geste de réveil d'écran éteint prédéfini dans le système, envoyer une instruction de réveil au processeur d'application.

12. Dispositif terminal selon la revendication 10, dans lequel la MCU est configurée en outre pour obtenir des données de détection ; et après la détermination, en utilisant la première fréquence, de l'événement tactile correspondant aux données tactiles, la MCU est configurée en outre pour :
déterminer, en fonction des données tactiles, si l'événement tactile est un événement de dysfonctionnement ; et lors de la détermination que l'événement tactile n'est pas un événement de dysfonctionnement, envoyer l'événement tactile au processeur d'application.

13. Dispositif terminal selon la revendication 12, dans lequel lors de la détermination, en fonction des données tactiles, si l'événement tactile est un événement de dysfonctionnement, la MCU est configurée spécifiquement pour :
lorsque le panneau tactile se trouve dans un état d'écran éteint, déterminer si l'éclairement mesuré par un capteur de lumière est supérieur à un second seuil prédéfini, et si l'éclairement n'est pas supérieur au second seuil prédéfini, déterminer que l'événement tactile est un événement de dysfonctionnement.
